# EUROPÄISCHE PATENTSCHRIFT

(11) **EP 3 635 467 B1**
(45) Veröffentlichungstag und Bekanntmachung des Hinweises auf die Patenterteilung: **04.09.2024**
(21) Anmeldenummer: 18736787.5
(22) Anmeldetag: 05.06.2018
(51) Int. Cl.: G02B 7/182

(54) **STELLVORRICHTUNG**
ADJUSTING DEVICE
DISPOSITIF DE RÉGLAGE

(30) Priorität: 07.06.2017 DE 102017112517
(43) Veröffentlichungstag der Anmeldung: 15.04.2020
(73) Patentinhaber: Physik Instrumente (PI) GmbH & Co. KG, 76228 Karlsruhe (DE)
(72) Erfinder: MATHUNI, Stefan, 73434 Aalen (DE); BRAMIGK, Arne, 76456 Kuppenheim (DE); MARTH, Harry, 76337 Waldbronn (DE); TROLL, Daniela, 76467 Bietigheim (DE)
(74) Vertreter: Grünecker Patent- und Rechtsanwälte PartG mbB
(86) Internationale Anmeldenummer: PCT/DE2018/100536
(87) Internationale Veröffentlichungsnummer: WO 2018/224094

(56) Entgegenhaltungen:
- WO-A1-2006/000352
- WO-A2-02/075365
- DE-A1- 102009 037 135
- US-A1- 2008 007 702
- US-A1- 2014 061 420

## Beschreibung

Die Erfindung betrifft eine Stellvorrichtung gemäß den Ansprüchen 1 bis 16 und die Verwendung einer solchen Stellvorrichtung in einer Kippspiegeleinheit.

Aus der DE 103 44 178 B4 ist eine Stellvorrichtung für ein optisches Element bekannt, wobei das optische Element über eine Manipulatoreinheit auf einem Grundkörper gelagert ist. Die Manipulatoreinheit weist hierbei ein Linearstellelement und einen beweglichen Manipulatorteil auf, wobei das Linearstellelement und der bewegliche Manipulatorteil über eine Festkörpergelenksanordnung miteinander verbunden sind. Der bewegliche Manipulatorteil selbst ist über ein weiteres Festkörpergelenk mit dem Manipulatorkopf verbunden, an welchem über einen Fassungsring das optische Element angeordnet ist.

Die Festkörpergelenksanordnung ist dergestalt ausgeführt, dass sie als Hebeluntersetzung fungiert, wodurch die bereits kleinen Stellbewegungen des Linearstellelements in noch geringere und hochgenaue Stellbewegungen des optischen Elements umgesetzt werden können. Weiterer verwandter Stand der Technik ist aus der WO 2006/000352 A1 und US 2008/007702 A1 bekannt, wobei die WO 2006/000352 A1 den Oberbegriff des Anspruchs 1 offenbart.

Wesentlicher Nachteil der aus der DE 103 44 178 B4 bekannten Stellvorrichtung ist der nur sehr begrenzte Stellbewegungsbereich.

Daher ist es Aufgabe der Erfindung, eine Stellvorrichtung bereitzustellen, die bei hoher Genauigkeit der Stellbewegung einen vergrößerten Stellbewegungsbereich ermöglicht.

Diese Aufgabe wird gelöst durch eine Stellvorrichtung gemäß Anspruch 1, wobei die sich daran anschließenden Unteransprüche mindestens zweckmäßige Weiterbildungen beschreiben.

Der im nachfolgenden Teil der Beschreibung mehrfach verwendete Begriff ,im Wesentlichen' im Zusammenhang mit der Angabe von geometrischen Daten wie Winkeln, Dimensionen, Lagen, Orientierungen oder Richtungen ist so zu verstehen, dass die entsprechenden geometrischen Daten eine Abweichung von +/- 5% gegenüber dem jeweils angegebenen geometrischen Datum haben können, wobei diese Abweichung beispielsweise auf Fertigungs- oder Montagetoleranzen zurückzuführen ist.

Die erfindungsgemäße Stellvorrichtung weist einen Grundkörper und eine relativ zu dem Grundkörper bewegliche Plattform auf, wobei an der Plattform ein zu bewegendes bzw. zu positionierendes Element, vorzugsweise ein optisches Element, anbringbar ist. Die Bewegung der Plattform bzw. des zu positionierenden Elements ist realisiert durch wenigstens zwei Antriebselemente, wobei jedes der wenigstens zwei Antriebselemente an einer ihm eigenen und zugeordneten Hebelübersetzungseinrichtung angreift.

Durch die Hebelübersetzungseinrichtung gelingt es, die bei üblicherweise verwendeten Antriebselementen sehr geringen Antriebsbewegungen - z.B. bei Antriebselementen in Form von Piezoaktuatoren - in eine vergleichsweise große resultierende Bewegung umzusetzen.

Die mittels der jeweiligen Hebelübersetzungseinrichtung übersetzte Antriebsbewegung eines zugeordneten Antriebselements wird über ein mit der Hebelübersetzungseinrichtung und der Plattform verbundenes Gelenkelement reibungslos auf die Plattform übertragen, so dass die Plattform eine definierte Stellbewegung relativ zu dem Grundkörper in Form einer Kippbewegung um eine durch die Plattform verlaufende Achse und/oder in Form einer translatorischen Bewegung parallel zu einer Achse, welche senkrecht zu einer durch die Plattform aufgespannten Plattformebene angeordnet ist, ausführen kann. Die Gelenkelemente lassen hierbei eine Kippbewegung der Plattform ausschließlich um die wenigstens eine Kippachse zu.

Mit der Plattform verbunden ist ein der Führung der Stellbewegung dienendes Federelement, welches ebenso mit dem Grundkörper verbunden ist, und welches einer parasitären translatorischen Bewegung in der Plattformebene und/oder einer parasitären rotatorischen Bewegung der Plattform um eine zu der Plattformebene senkrecht angeordnete Rotationsachse entgegenwirkt, wobei besagte parasitäre Bewegungen aus der Stellbewegung resultieren. Gleichzeitig lässt das Federelement jedoch eine translatorische Bewegung in einer zu der Rotationsachse parallel angeordneten Achse zu. Bevorzugt ist das Federelement eine flache Feder oder eine Membran aus einem metallischen Werkstoff, insbesondere aus Federstahl.

Es kann von Vorteil sein, dass die Plattform zweiteilig ist und ein Plattformoberteil, an welchem ein durch die Stellvorrichtung zu bewegendes Element anbringbar ist, und ein Plattformunterteil aufweist, und das Federelement in einer seiner Form entsprechenden Ausnehmung in dem Plattformunterteil angeordnet ist und vorzugsweise mit dem Unterteil verklebt ist. Dadurch gelingt eine Anordnung des Federelements nahe an den Gelenkelementen bzw. nahe an dem Drehpunkt der Plattform, woraus u.a. geringe mechanische Spannungen in den verformbaren Bauteilen resultieren. Idealerweise fällt der Massenschwerpunkt der bewegten Masse hierbei mit dem Drehpunkt der Plattform zusammen, so dass eine unerwünschte parasitäre Pendelbewegung der Plattform vermieden bzw. weitestgehend vermieden wird. Durch die Anordnung des Federelements in einer Ausnehmung des Plattformunterteils resultiert weiterhin ein geringer und reduzierter Bauraum, und die Befestigung über einen Klebeprozess erspart die Verwendung weiterer Bauteile und verringert somit den Montageaufwand. Neben der Verbindung des Federelements mit dem Plattformunterteil mittels eines Klebeprozesses sind weitere Verbindungsarten wie etwa Löten oder Schweißen denkbar. Denkbar ist weiterhin eine rein mechanische Befestigung, bei der beispielsweise das Federelement in Ausnehmungen, z.B. Schlitzen, des Plattformunterteils liegt bzw. gelagert ist.

Es kann auch von Vorteil sein, dass das Federelement einen Zentralabschnitt und wenigstens zwei sich von dem Zentralabschnitt erstreckende Armabschnitte umfasst. Dadurch ist auf einfache Weise eine hohe Führungsgenauigkeit möglich, wobei ein entsprechendes Federelement zugleich einen vergleichsweise großen Verstellbereich bei geringer mechanischer Belastung der Stellvorrichtung erlaubt.

Weiterhin kann es von Vorteil sein, dass die Gelenkelemente als Festkörpergelenke ausgeführt sind. Festkörpergelenke arbeiten reibungsfrei und ihre Verformung ist nur mit einer sehr geringen Hysterese behaftet. Zudem erlauben Festkörpergelenke eine hohe Dynamik der entsprechenden Verstellbewegung, und ihr Wirkungsgrad ist hoch. Der Einsatz von Festkörpergelenken ist daher insbesondere bei hohen Anforderungen an die Genauigkeit und Schnelligkeit der erfindungsgemäßen Stellvorrichtung vorteilhaft.

Zudem kann es von Vorteil sein, dass die Gelenkelemente als Paar im Wesentlichen senkrecht zueinander angeordneter Blattfedern ausgeführt sind. Im Wesentlichen senkrecht zueinander angeordnete Blattfedern sorgen für geringe mechanische Belastungen bzw. Spannungen in der Stellvorrichtung bei komplexer Krafteinwirkung. Insbesondere kann mit senkrecht zueinander angeordneten bzw. sich kreuzenden Blattfedern der Forderung nach einer vergleichbaren Dynamik und vergleichbaren Stellbewegungen pro jeweiliger Verstell- bzw. Kippachse begegnet werden.

Außerdem kann es von Vorteil sein, dass die Plattform lösbar mit dem Grundkörper verbunden ist. Dies ist vorteilhaft mit Hinblick auf eine einfachere und damit kostengünstigere Fertigung der erfindungsgemäßen Stellvorrichtung. Weiterhin ergibt sich hierdurch die Möglichkeit zum einfachen Austausch der Plattform bzw. des damit verbundenen zu positionierenden Elements. Ein Austausch ist insbesondere dann vorteilhaft, wenn die Gelenkelemente dauerhaft bzw. einstückig mit der Plattform verbunden bzw. ausgeführt sind, denn die Gelenkelemente unterliegen einer hohen mechanischen Belastung und ein entsprechender Ausfall während des Betriebs ist möglich.

Erfindungsgemäß weist die Hebelübersetzungseinrichtung wenigstens zwei zusammenwirkende Hebelabschnitte auf. Hierdurch kann das gewünschte Übersetzungsverhältnis realisiert werden. Insbesondere vorteilhaft ist es, wenn die Gesamthebelübersetzung der Hebelübersetzungseinrichtung zwischen 5 und 7 liegt und besonders bevorzugt 6,25 beträgt.

Hierbei kann es von Vorteil sein, dass die wenigstens zwei zusammenwirkenden Hebelabschnitte ineinander verschachtelt angeordnet sind. Dies ermöglicht ein vergleichsweise großes Übersetzungsverhältnis bei gleichzeitig geringem benötigtem Bauraum. Mit anderen Worten ist somit eine sehr kompakte Hebelübersetzungseinrichtung realisierbar.

Zusätzlich kann es hierbei von Vorteil sein, dass die Hebelabschnitte über wenigstens ein Festkörpergelenk miteinander verbunden sind. Dadurch gelingt eine reibungsfrei und hoch dynamisch funktionierende Hebelübersetzungseinrichtung.

Darüber hinaus kann es von Vorteil sein, dass die Hebelübersetzungseinrichtung einstückig mit dem Grundkörper ausgebildet ist. Dies erlaubt einen kompakteren Aufbau der Stellvorrichtung bei gleichzeitiger Einhaltung sehr geringer Fertigungstoleranzen.

Ebenso kann es von Vorteil sein, dass die Plattform um zwei sich in einem rechten Winkel kreuzende und durch die Plattform verlaufende Kippachsen verkippbar ist und die Stellvorrichtung vier Antriebselemente und vier an der Plattform befestigte Gelenkelemente in Form von Festkörpergelenken aufweist. Hierdurch erweitert sich das Anwendungsspektrum der erfindungsgemäßen Stellvorrichtung.

Hierbei kann es insbesondere von Vorteil sein, dass die Festkörpergelenke einstückig mit der Plattform verbunden sind. Dadurch reduziert sich der Montageaufwand erheblich.

Zusätzlich kann es hierbei von Vorteil sein, dass das Federelement einen ringförmigen Zentralabschnitt und vier sich hiervon sternförmig erstreckende Armabschnitte aufweist. Dadurch ist auf einfache Weise eine hohe Führungsgenauigkeit möglich, wobei ein entsprechendes Federelement zugleich einen vergleichsweise großen Verstellbereich bei geringer mechanischer Belastung der Stellvorrichtung erlaubt. Denkbar ist auch ein Federelement mit drei oder mehr als vier sich sternförmig von dem Zentralabschnitt erstreckenden Armabschnitten.

Des Weiteren kann es hierbei von Vorteil sein, dass der Kreuzungspunkt der beiden Kippachsen, welcher einen Pivot-Punkt definiert, im Wesentlichen in der gleichen Ebene liegt, welche durch die vier Befestigungspunkte der Gelenkelemente mit der Plattform aufgespannt wird. Daraus resultiert eine geringe mechanische Belastung in den Armabschnitten und den Gelenkelementen.

Es kann auch von Vorteil sein, dass bei einem Volumen der Einhüllenden der Stellvorrichtung zwischen 55 und 60cm³ eine Kippbewegung um einen Kippwinkel zwischen 5x10E-6 und 1 Grad und/oder die translatorische Bewegung in einem Bereich zwischen 1nm und 200µm erfolgen kann. Selbst bei geringen Abmessungen der Stellvorrichtung, bei denen das Volumen der Stellvorrichtung bzw. das Volumen der Einhüllenden der Stellvorrichtung entsprechend gering ist, erlaubt die erfindungsgemäße Stellvorrichtung vergleichsweise große Kippwinkel und/oder eine vergleichsweise große translatorische Bewegung oder Auslenkung der Plattform.

Darüber hinaus kann es von Vorteil sein, dass die Plattform den Wechsel zwischen minimalem und maximalem Kippwinkel und/oder zwischen minimaler und maximaler translatorischer Auslenkung mit einer Frequenz von bis zu 200Hz ausführen kann. Die erfindungsgemäße Stellvorrichtung bietet somit eine hohe Dynamik bezüglich der Stellbewegungen.

Die Erfindung betrifft zudem die Verwendung der Stellvorrichtung in einer Kippspiegeleinheit. Dadurch gelingt die hochdynamische Ablenkung von Strahlengängen innerhalb einer kompakt bauenden Kippspiegeleinheit einer optischen Einrichtung.

Im Folgenden wird ein Ausführungsbeispiel der Erfindung anhand der beigefügten Figuren beschrieben.

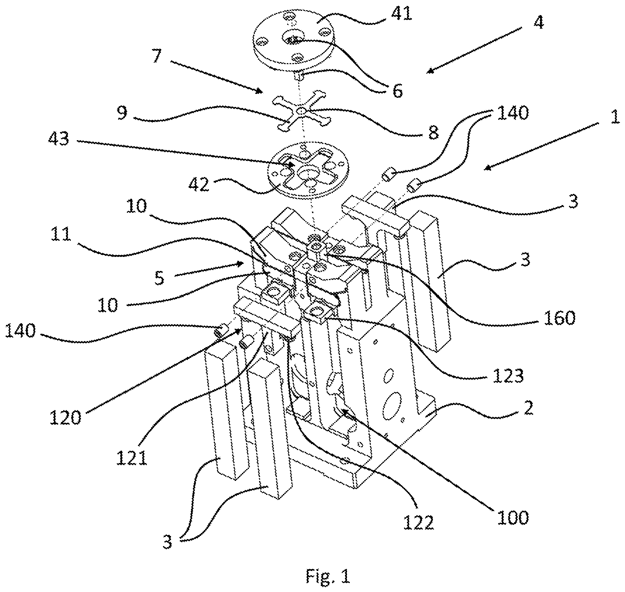

Fig. 1 zeigt eine erfindungsgemäße Stellvorrichtung 1 in einer perspektivischen Explosionsdarstellung. Ein Grundkörper 2 aus Titan Ti6Al4V (Grade 5) weist insgesamt vier Grundkörperausnehmungen 100 zur jeweiligen Aufnahme eines Antriebselementes 3 in Form eines piezoelektrischen Linearaktuators auf. Die piezoelektrischen Linearaktuatoren sind über eine Vorspannungseinrichtung 120, welche ein im Wesentlichen T-förmiges Vorspannelement 121, zwei Druckfedern 122 und Lagerabschnitte 123 umfasst, mit einer Druckspannung in Richtung ihrer Längsausdehnung beaufschlagt. Jede Druckfeder 122 ist in zusammengesetztem Zustand der Stellvorrichtung in einer entsprechenden Ausnehmung des Vorspannelements 121 teilweise eingesetzt und liegt mit einem seiner beiden distalen Enden an dem Vorspannelement 121 an bzw. stützt sich daran ab. Das andere distale Ende der jeweiligen Druckfeder liegt an dem jeweils zugeordneten Lagerabschnitt 123 an bzw. stützt sich daran ab, wobei der Lagerabschnitt ebenfalls eine entsprechende Ausnehmung aufweist, in welche die Druckfeder teilweise hineinragt. Durch das jeweilige teilweise Hineinragen in die Ausnehmung des Vorspannelements und des Lagerabschnitts gelingt eine Lagerung bzw. Führung der Druckfedern 122.

Integral bzw. einstückig mit dem Grundkörper 2 ausgeführt sind insgesamt vier Hebelübersetzungseinrichtungen 5, die jeweils zwei ineinander verschachtelte Hebelabschnitte 10 aufweisen, welche über ein Festkörpergelenk 11 miteinander verbunden bzw. wirkverbunden sind.

Die Plattform 4 weist ein Plattformoberteil 41 und ein Plattformunterteil 42 auf, wobei mit dem Plattformoberteil insgesamt vier Gelenkelemente 6 einstückig oder integral ausgebildet sind, wovon in Fig. 1 jedoch nur zwei zu sehen sind. Zwischen dem Plattformoberteil 41 und dem Plattformunterteil 42 ist ein Federelement 7 aus Federstahl angeordnet, wobei das Federelement 7 einen ringförmigen zentralen Abschnitt 8 und vier sich vom zentralen Abschnitt 8 sternförmig erstreckende Armabschnitte 9 aufweist. In zusammengesetztem bzw. zusammengebautem Zustand kommt das Federelement 7 in der komplementären und somit ebenfalls sternförmigen Ausnehmung 43 des Plattformunterteils 42 zu liegen bzw. ist mit diesen vorzugsweise durch eine Klebung verbunden.

Das Federelement 7 ist in zusammengesetztem bzw. zusammengebautem Zustand mittels eines in Fig. 1 nicht dargestellten Befestigungselements, vorzugweise einer Schraube, mit dem Grundkörper verbunden. Dabei wirkt das Befestigungselement mit dem Befestigungsteil 160 des Grundkörpers 2 zusammen. Durch die Befestigung des Federelements 7 an dem Grundkörper 2 ist aufgrund der festen Verbindung zwischen dem Federelement 7 und dem Plattformunterteil 42 und der festen Verbindung zwischen dem Plattformunterteil 42 und dem Plattformoberteil 41 auch die gesamte Plattform 4 mit dem Grundkörper 2 verbunden.

Weiterhin ragen in zusammengesetztem Zustand der Stellvorrichtung die Gelenkelemente 6 durch die entsprechenden Durchbrüche des Plattformunterteils 42 und ragen in entsprechende Ausnehmungen des jeweils zugewandten Hebelabschnitts 10, wo sie jeweils durch ein Befestigungselement 140 mit dem entsprechenden Hebelabschnitt 10 verbunden sind.

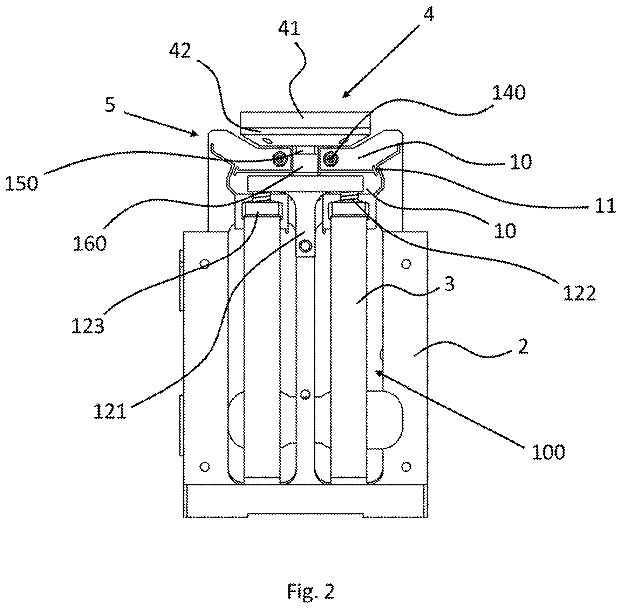

Fig. 2 zeigt die erfindungsgemäße Stellvorrichtung gemäß Fig. 1 in zusammengesetztem Zustand in einer Seitenansicht. Zu erkennen ist hierbei das in Fig. 1 nicht dargestellte Befestigungselement 150 in Form einer Schraube, welche mit einem entsprechenden Gewinde in dem Befestigungsteil 160 zusammenwirkt. Der in Fig. 2 nicht zu erkennende Kopf der Schraube 150 liegt hierbei an dem Federelement 7 an, während der Schrauben- bzw. Gewindeschaft durch die ringförmige Öffnung 8 des Federelements 7 hindurchragt. Durch Einschrauben der Schraube in das Gewinde des Befestigungselements 150 wird das Federelement und mit diesem die gesamte Plattform mit dem Grundkörper verbunden bzw. an diesem befestigt.

Weiterhin ist Fig. 2 zu entnehmen, dass die beiden zu erkennenden Linearaktuatoren 3 jeweils mit einem ihrer distalen Enden an dem zugehörigen Lagerungsabschnitt 123 der Vorspanneinrichtung 120 anliegen, während das Vorspannelement 121 mit dem Grundkörper verbunden ist und zwischen dem Vorspannelement 121 und dem jeweiligen Lagerungsabschnitt 123 die Druckfeder 122 derart angeordnet ist, dass jeweils ein Teil in den Ausnehmungen von Vorspannelement und Lagerungsabschnitt zu liegen kommt. Dadurch, dass das Vorspannelement fest mit dem Grundkörper verbunden ist, wirkt die Druckfeder dergestalt, dass der Lagerungsabschnitt 123, der seinerseits einstückig oder integral mit einem Anlageabschnitt 101 der Hebelübersetzungseinrichtung 5 ausgeführt ist, in Richtung auf den jeweiligen Linearaktuator zu gedrückt ist. Damit wird auch der Anlageabschnitt 101 in Richtung auf den jeweiligen Linearaktuator zu gedrückt, und aufgrund der festen Abstützung des gegenüberliegenden distalen Endes des jeweiligen Linearaktuators unterliegt dieser folglich einer Druckspannung.

Die beiden Hebelabschnitte 10 sind in der Längsausdehnungsrichtung der Linearaktuatoren hintereinander angeordnet, wobei der dem Linearaktuator zugewandte Hebelabschnitt kürzer ist als der dem Linearaktuator abgewandte Hebelabschnitt. Während mit dem kürzeren Hebelabschnitt eine Hebelübersetzung von etwa 2 realisierbar ist, gelingt mit dem längeren Hebelabschnitt eine Hebelübersetzung von etwa 3. Die Gesamthebelübersetzung liegt bei ca. 6,25.

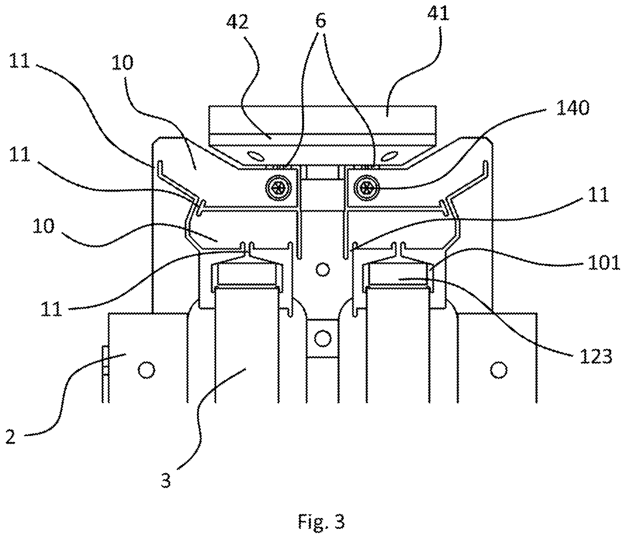

Fig. 3 zeigt als Einzelheit den oberen Abschnitt der Stellvorrichtung gemäß den Figuren 1 und 2, wobei hier jedoch aus Gründen der Übersichtlichkeit die Vorspannungseinrichtung 120 weggelassen wurde.

Das obere distale Ende des jeweiligen Linearaktuators liegt an dem Lagerungsabschnitt 123 der Vorspanneinrichtung 120 an bzw. greift an diesem an, wobei der Lagerungsabschnitt 123 einstückig oder integral mit dem Anlageabschnitt 101 der Hebelübersetzungseinrichtung ausgebildet ist.

An den Anlageabschnitt 101 grenzt in einer dem jeweiligen Linearaktuator abgewandten Richtung ein erstes Festkörpergelenk 11 der Hebelübersetzungseinrichtung an.

An das zuvor beschriebene Festkörpergelenk grenzt in einer dem jeweiligen Linearaktuator abgewandten Richtung ein erster Hebelabschnitt 10 an, wobei dieser erste Hebelabschnitt zum Einen über ein weiteres Festkörpergelenk 11 mit dem Grundkörper verbunden ist, und zum Anderen über ein zusätzliches Festkörperelement 11 mit einem zweiten Hebelabschnitt, der in einer dem jeweiligen Linearaktuator abgewandten Richtung hinter dem ersten Hebelabschnitt angeordnet ist, verbunden ist.

Der erste Hebelabschnitt erstreckt sich über eine Länge von etwa 8mm, wobei diese Längserstreckungsrichtung im Wesentlichen senkrecht zur Erstreckungsrichtung des jeweils zugeordneten Linearaktuators angeordnet ist.

Der zweite Hebelabschnitt hat im Gegensatz zu dem ersten Hebelabschnitt eine abgewinkelte Form, wobei die wirksame Hebellänge in etwa 10mm beträgt. Über ein weiteres Festkörpergelenk ist der zweite Hebelabschnitt mit dem Grundkörper verbunden.

Sämtliche Festkörpergelenke der Hebelübersetzungseinrichtung haben eine Länge von 1mm und eine Breite von 0,4mm.

Über das Befestigungselement 140 in Form einer Schraube erfolgt eine Verbindung zwischen dem zweiten, längeren Hebelabschnitt und dem jeweiligen einstückig mit dem Plattformunterteil 42 ausgeführten Gelenkelement 6.

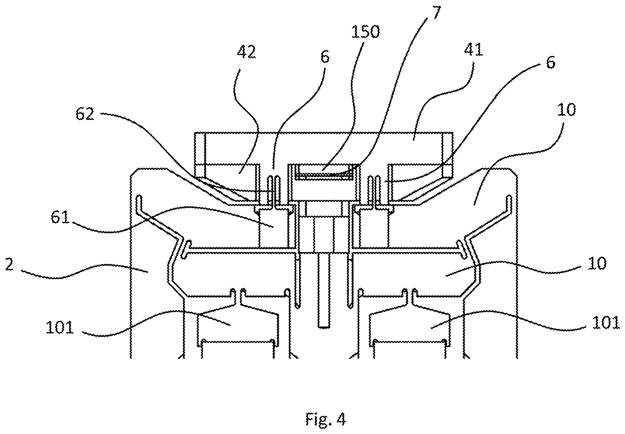

Fig. 4 ist eine auf die Figuren 1 bis 3 zurückgehende Detaildarstellung des oberen Teils der Stellvorrichtung, wobei gegenüber der nächstkommenden Fig. 3 die Lagerungsabschnitte 123 weggelassen und die Gelenkelemente 6 freigeschnitten sind.

Fig. 4 lässt sich entnehmen, dass jedes der beiden gezeigten Gelenkelemente 6 aus einem Paar von Blattfedern 61 und 62 gebildet ist, wobei die beiden Blattfedern im Wesentlichen senkrecht zueinander angeordnet sind, um dadurch die benötigten Freiheitsgrade in den entsprechend im Wesentlichen senkrecht zueinander angeordneten Bewegungs- bzw. Kipprichtungen zu ermöglichen.

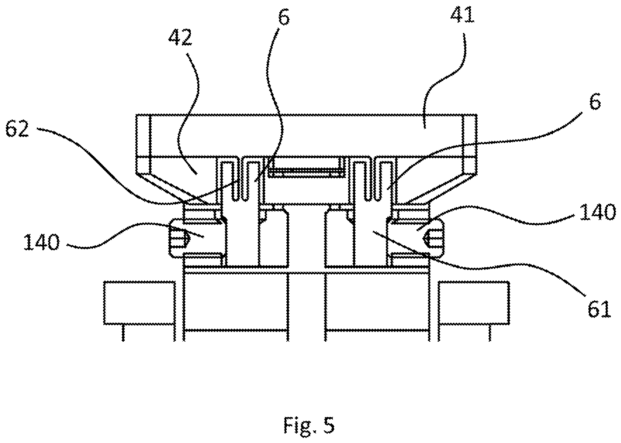

Wie bereits zuvor erwähnt, ist jedes der Gelenkelemente mittels eines Befestigungselements 140, das in Fig. 4 aus Übersichtlichkeitsgründen weggelassen ist, mit der jeweils zugeordneten Hebelübersetzungseinrichtung verbunden bzw. gekoppelt, so dass die hebelübersetzte Auslenkung des Linearaktuators auf die Plattform 4 übertragbar ist. In Fig. 5 ist dies an einem weiteren Detailausschnitt bezüglich der vorhergehenden Figuren 1 bis 4 zu erkennen. Dort sind die Befestigungselemente 140 als Madenschrauben ausgeführt.

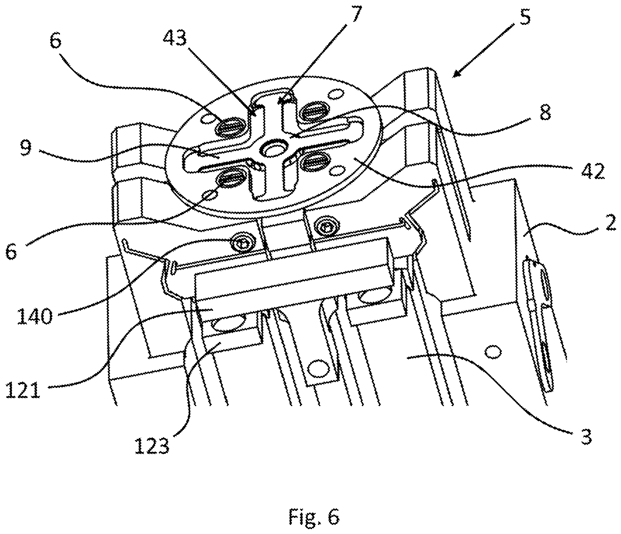

Fig. 6 ist eine perspektivische Detaildarstellung des oberen Abschnitts der Stellvorrichtung gemäß den Figuren 1 bis 5 mit einem Schnitt durch das Plattformunterteil 42, wobei der Schnitt parallel zur Plattformebene verläuft. Dadurch ist im Detail die Anordnung des Federelements 7 in der Ausnehmung 43 des Plattformunterteils 42 zu erkennen.

Das kreuzförmige Federelement 7 weist einen ringförmigen Zentralabschnitt 8 und vier sich hiervon erstreckende Armabschnitte 9, wobei benachbarte Armabschnitte jeweils einen Winkel von im Wesentlichen 90 Grad zwischen sich einschließen.

Das Federelement ist aus Federblech bzw. Federstahl gefertigt, und weist eine Dicke bzw. Materialstärke von 0,15mm auf. Die Länge eines jeden Armabschnitts beträgt - vom Mittelpunkt des kreisförmigen Zentralabschnitts gemessen - 7,5mm, und die Breite jedes Armabschnitts beträgt an der schmalsten Stelle, d.h. der Stelle mit konstanter Breite, 1,5mm.

Das kreuzförmige Federelement 7 ist in der komplementären Ausnehmung 43 angeordnet bzw. darin eingesetzt, wobei der breitere Endabschnitt des jeweiligen Armabschnitts mit dem Plattformunterteil 42 verklebt ist.

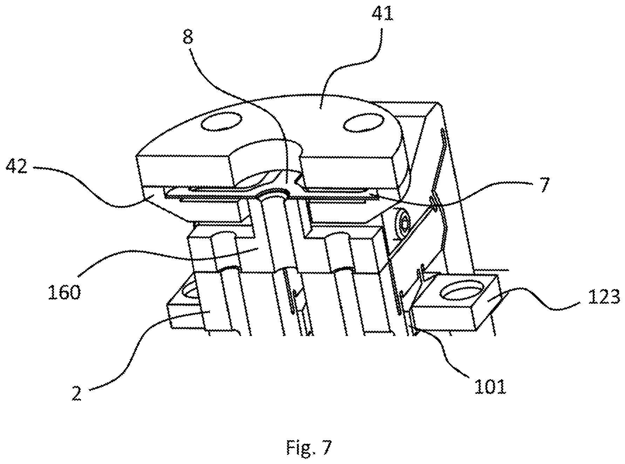

Fig. 7 zeigt einen Schnitt senkrecht zur Plattformebene an einer Stellvorrichtung gemäß den Figuren 1 bis 6. Deutlich ist wiederum die Anordnung des Federelements 7 zwischen dem Plattformoberteil 41 und dem Plattformunterteil 42 zu erkennen, wobei der ringförmige Zentralabschnitt 8 des Federelements an dem Befestigungsteil 160 anliegt.

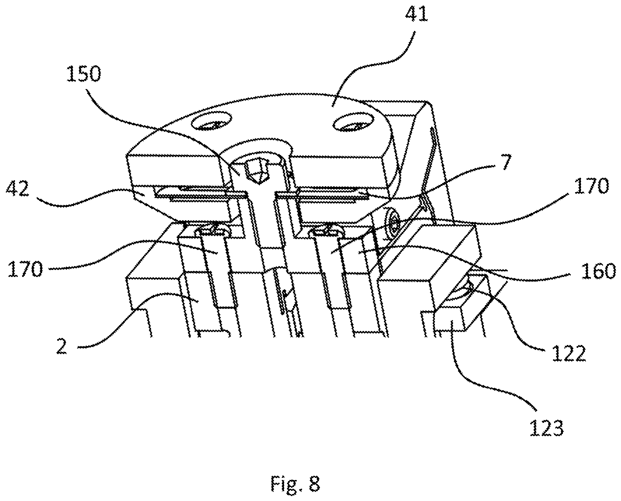

Fig. 8 entspricht in weiten Teilen Fig. 7, jedoch ist hier zum Einen das Befestigungselement 150 in Form einer Schraube dargestellt, und zum Anderen die ebenfalls als Schrauben ausgeführten Befestigungselemente 170, welche das Befestigungsteil 160 mit dem Grundkörper 2 verbinden.

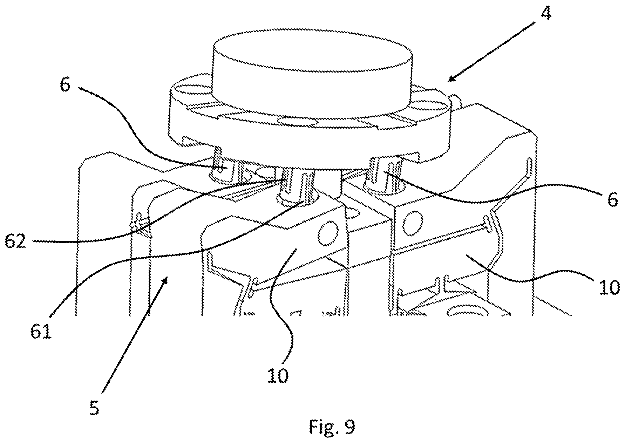

Fig. 9 zeigt in einer perspektivischen Darstellung eine durch Berechnung simulierte Auslenkungs- bzw. Positionierungssituation der Stellvorrichtung gemäß den Figuren 1 bis 8, bei welcher die in Fig. 9 vorne links gezeigte Hebelübersetzungseinrichtung und die in Fig. 9 nicht zu erkennende diagonal gegenüberliegende Hebelübersetzungseinrichtung hinten rechts ausgelenkt sind. Während der zur vorne links angeordneten Hebelübersetzungseinrichtung zugeordnete Linearaktuator eine Ausdehnungsbewegung vollführt, macht der diagonal gegenüberliegende Linearaktuator eine Kontraktionsbewegung. Insgesamt resultiert dadurch eine definierte Kippung um zwei Kippachsen.

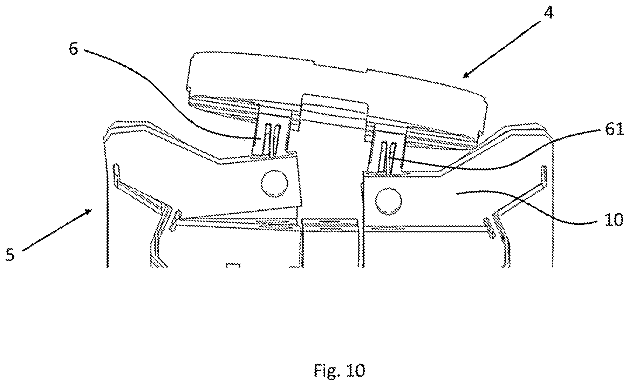

Bei der Darstellung von Fig. 9 ist zu berücksichtigen, dass die dargestellten Auslenkungen bzw. Deformationen wesentlich größer sind als in der Realität. Dies gilt ebenso für die Darstellung von Fig. 10, welche einer Seitenansicht bezüglich der Auslenkungssituation gemäß Fig. 9 entspricht.

In Fig. 10 ist deutlich zu erkennen, dass durch die Ausdehnung des zugeordneten Linearaktuators die Hebelübersetzungseinrichtung vorne links eine entsprechend vergrößerte Bewegung nach oben, d.h. in einer Richtung auf die Plattform zu, vollführt, während durch die Kontraktion des diagonal gegenüberliegenden Linearaktuators eine Bewegung der Hebelübersetzungseinrichtung nach unten, d.h. in einer von der Plattform abgewandten Richtung, resultiert. In Fig. 10 ist ebenso deutlich die Biegedeformation der Blattfeder 61 aufgrund der entsprechenden Auslenkungen der beiden betätigten Hebelübersetzungseinrichtungen zu erkennen.

### Bezugszeichenliste

- 1: Stellvorrichtung
- 2: Grundkörper
- 3: Antriebselement
- 4: Plattform
- 5: Hebelübersetzungseinrichtung
- 6: Gelenkelement
- 7: Federelement
- 8: Zentralabschnitt
- 9: Armabschnitt
- 10: Hebelabschnitt
- 11: Festkörpergelenk
- 41: Plattformoberteil
- 42: Plattformunterteil
- 43: Ausnehmung (der Plattform 4)
- 61: Blattfeder
- 62: Blattfeder
- 100: Grundkörperausnehmung
- 101: Anlageabschnitt
- 120: Vorspannungseinrichtung
- 121: Vorspannelement
- 122: Druckfeder
- 123: Lagerabschnitt
- 140: Befestigungselement
- 150: Befestigungselement
- 160: Befestigungsteil
- 170: Befestigungselement

## Patentansprüche

1. Stellvorrichtung (1) mit einem Grundkörper (2), wenigstens zwei eine Antriebsbewegung realisierenden Antriebselementen (3) und einer relativ zu dem Grundkörper beweglichen Plattform (4), wobei jedes der Antriebselemente (3) an einer diesem zugeordneten Hebelübersetzungseinrichtung (5) anliegt, und die mit der Hebelübersetzungseinrichtung (5) übersetzte Antriebsbewegung eines Antriebselements (3) über ein mit der Hebelübersetzungseinrichtung und der Plattform (4) verbundenes Gelenkelement (6) auf die Plattform (4) übertragbar ist, so dass diese eine definierte Stellbewegung relativ zu dem Grundkörper in Form einer Kippbewegung um eine durch die Plattform verlaufende Achse und/oder in Form einer translatorischen Bewegung parallel zu einer Achse, welche senkrecht zu einer durch die Plattform aufgespannten Plattformebene angeordnet ist, ausführen kann, wobei die Gelenkelemente eine Kippbewegung der Plattform ausschließlich um die wenigstens eine Kippachse zulassen, **dadurch gekennzeichnet, dass** an der Plattform weiterhin ein der Führung der Stellbewegung dienendes und mit dem Grundkörper fest verbundenes Federelement (7) angeordnet ist, wobei das Federelement (7) einer entsprechenden parasitären translatorischen Bewegung in der Plattformebene bzw. einer entsprechenden parasitären rotatorischen Bewegung der Plattform um eine zu der Plattformebene senkrecht angeordnete Rotationsachse aufgrund der Stellbewegung entgegenwirkt, wobei die Hebelübersetzungseinrichtung (5) wenigstens zwei zusammenwirkende Hebelabschnitte (10) aufweist.

2. Stellvorrichtung nach Anspruch 1, **dadurch gekennzeichnet, dass** die Plattform (4) zweiteilig ist und ein Plattformoberteil (41), an welchem ein durch die Stellvorrichtung zu bewegendes Element anbringbar ist, und ein Plattformunterteil (42) aufweist, und das Federelement (7) in einer seiner Form entsprechenden Ausnehmung (43) in dem Plattformunterteil angeordnet ist und vorzugsweise mit dem Plattformunterteil verklebt ist.

3. Stellvorrichtung nach Anspruch 1 oder 2, **dadurch gekennzeichnet, dass** das Federelement (7) einen Zentralabschnitt (8) und wenigstens zwei sich von dem Zentralabschnitt erstreckende Armabschnitte (9) umfasst.

4. Stellvorrichtung nach einem der vorhergehenden Ansprüche, **dadurch gekennzeichnet, dass** die Gelenkelemente (6) als Festkörpergelenke ausgeführt sind.

5. Stellvorrichtung nach Anspruch 4, **dadurch gekennzeichnet, dass** jedes der Gelenkelemente (6) als Paar im Wesentlichen senkrecht zueinander angeordneter Blattfedern (61, 62) ausgeführt sind.

6. Stellvorrichtung nach einem der vorhergehenden Ansprüche, **dadurch gekennzeichnet, dass** die Plattform (4) lösbar mit dem Grundkörper (2) verbunden ist.

7. Stellvorrichtung nach Anspruch 1, **dadurch gekennzeichnet, dass** die wenigstens zwei zusammenwirkenden Hebelabschnitte (10) ineinander verschachtelt angeordnet sind.

8. Stellvorrichtung nach Anspruch 1 oder 7, **dadurch gekennzeichnet, dass** die Hebelabschnitte über wenigstens ein Festkörpergelenk (11) miteinander verbunden sind.

9. Stellvorrichtung nach einem der Ansprüche 1, 7 oder 8, **dadurch gekennzeichnet, dass** die Hebelübersetzungseinrichtung (5) einstückig mit dem Grundkörper (2) ausgebildet ist.

10. Stellvorrichtung nach einem der Ansprüche 1 oder 7 bis 9, **dadurch gekennzeichnet, dass** die Gesamthebelübersetzung der Hebelübersetzungseinrichtung (5) zwischen 5 und 7 liegt.

11. Stellvorrichtung nach einem der vorhergehenden Ansprüche, **dadurch gekennzeichnet, dass** die Plattform (4) um zwei sich in einem rechten Winkel kreuzende und durch die Plattform verlaufende Kippachsen verkippbar ist, und die Stellvorrichtung vier Antriebselemente (3) und vier an der Plattform befestigte Gelenkelemente (6) in Form von Festkörpergelenken aufweist.

12. Stellvorrichtung nach Anspruch 11, **dadurch gekennzeichnet, dass** die Festkörpergelenke einstückig mit der Plattform verbunden sind.

13. Stellvorrichtung nach Anspruch 11 oder 12, **dadurch gekennzeichnet, dass** das Federelement einen ringförmigen Zentralabschnitt (8) und vier sich hiervon sternförmig erstreckende Armabschnitte (9) aufweist.

14. Stellvorrichtung nach einem der Ansprüche 11 bis 13, **dadurch gekennzeichnet, dass** der Kreuzungspunkt der beiden Kippachsen, welcher einen Pivot-Punkt definiert, im Wesentlichen in der gleichen Ebene liegt, welche durch die vier Befestigungspunkte der Gelenkelemente mit der Plattform aufgespannt wird.

15. Stellvorrichtung nach einem der vorhergehenden Ansprüche, **dadurch gekennzeichnet, dass** bei einem Volumen der Einhüllenden der Stellvorrichtung zwischen 55 und 60cm³ eine Kippbewegung um einen Kippwinkel zwischen 5x10E-6° und 1° Grad und/oder die translatorische Bewegung in einem Bereich zwischen 1nm und 200µm erfolgen kann.

16. Stellvorrichtung nach Anspruch 15, **dadurch gekennzeichnet, dass** die Plattform den Wechsel zwischen minimalem und maximalem Kippwinkel und/oder zwischen minimaler und maximaler translatorischer Auslenkung mit einer Frequenz von bis zu 200Hz ausführen kann.

17. Verwendung der Stellvorrichtung nach einem der vorhergehenden Ansprüche in einer Kippspiegeleinheit.

## Claims

1. Adjusting device (1) with a base body (2), at least two drive elements (3) realizing a drive motion, and a platform (4) movable relative to said base body, where each of said drive elements (3) abuts against a lever transmission device (5) that is associated with the former, and the drive motion of a drive element (3) transmitted with said lever transmission device (5) is transferable to said platform (4) via a joint element (6) connected to said lever transmission device and said platform (4), so that said platform (4) can perform a defined adjustment motion relative to said base body in the form of a tilting motion about an axis passing through said platform and/or in the form of a translational motion parallel to an axis which is arranged perpendicular to a platform plane defined by said platform, where said joint elements allow for a tilting motion of said platform solely about the at least one tilting axis, **characterized in that** a spring element (7) used for guiding the adjustment motion and firmly connected to said base body is furthermore arranged at said platform, where said spring element (7) counteracts a corresponding parasitic translational motion in the platform plane and a corresponding parasitic rotatory motion of said platform about an axis of rotation arranged perpendicular to the platform plane due to the adjustment motion, respectively, wherein said lever transmission device (5) comprises at least two interacting lever sections (10).

2. Adjusting device according to claim 1, **characterized in that** said platform (4) is made of two parts and comprise a platform upper part (41), on which an element to be moved by said adjusting device is attachable, and a platform lower part (42), and said spring element (7) is arranged in a recess (43) corresponding to its shape in said platform lower part and is preferably adhesively bonded to said platform lower part.

3. Adjusting device according to claim 1 or 2, **characterized in that** said spring element (7) comprises a central section (8) and at least two arm sections (9) extending from said central section.

4. Adjusting device according to one of the preceding claims, **characterized in that** said joint elements (6) are formed as flexure hinges.

5. Adjusting device according to claim 4, **characterized in that** each of said joint elements (6) is formed as a pair of leaf springs (61, 62) arranged substantially perpendicular to each other.

6. Adjusting device according to one of the preceding claims, **characterized in that** said platform (4) is releasably connected to said base body (2).

7. Adjusting device according to claim 1, **characterized in that** said at least two interacting lever sections (10) are arranged nested in each other.

8. Adjusting device according to claim 1 or 7, **characterized in that** said lever sections are connected to each other by way of at least one flexure hinge (11).

9. Adjusting device according to one of the claims 1, 7 or 8, **characterized in that** said lever transmission device (5) is formed integrally with said base body (2).

10. Adjusting device according to one of the claims 1 or 7 to 9, **characterized in that** the total lever transmission of said lever transmission device (5) is between 5 and 7.

11. Adjusting device according to one of the preceding claims, **characterized in that** said platform (4) is tiltable about two tilting axes that intersect at a right angle and pass through said platform, and said adjusting device comprises four drive elements (3) and four joint elements (6) in the form of flexure hinges attached to said platform.

12. Adjusting device according to claim 11, **characterized in that** said flexure hinges are connected integrally to said platform.

13. Adjusting device according to claim 11 or 12, **characterized in that** said spring element comprises an annular central section (8) and four arm sections (9) extending therefrom in a star-shaped manner.

14. Adjusting device according to one of the claims 11 to 13, **characterized in that** the point of intersection of said two tilting axes, which defines a pivot point, is substantially in the same plane which is defined by the four attachment points of said joint elements to said platform.

15. Adjusting device according to one of the preceding claims, **characterized in that**, at a volume of the envelopes of said adjusting device between 55 and 60cm³, a tilting motion can take place about a tilting angle between 5x10E-6° and 1° and/or the translational motion can take place in a range between 1nm and 200 µm.

16. Adjusting device according to claim 15, **characterized in that** said platform can perform the changeover between the minimum and the maximum tilting angle and/or between the minimum and the maximum translational deflection at a frequency of up to 200Hz.

17. Use of said adjusting device according to one of the preceding claims in a tilting mirror unit.

## Revendications

1. Dispositif de réglage (1) comportant un corps de base (2), au moins deux éléments d'entraînement (3) qui réalisent un mouvement d'entraînement, et une plateforme (4) mobile par rapport au corps de base, dans lequel chacun des éléments d'entraînement (3) repose sur un dispositif de transmission à levier (5) qui lui est associé, et le mouvement d'entraînement d'un élément d'entraînement (3) transmis par le dispositif de transmission à levier (5) peut être transféré à la plate-forme (4) par l'intermédiaire d'un élément d'articulation (6) connecté au dispositif de transmission à levier et à la plateforme (4), de manière à ce qu'il puisse effectuer un mouvement de réglage défini par rapport au corps de base, sous forme d'un mouvement de basculement autour d'un axe traversant la plateforme et/ou sous forme d'un mouvement de translation parallèle à un axe qui est agencé de manière perpendiculaire à un plan de plate-forme passant par la plate-forme, dans lequel les éléments d'articulation permettent un mouvement de basculement de la plate-forme exclusivement autour dudit au moins un axe de basculement, **caractérisé en ce qu'**un élément de ressort (7) qui sert à guider le mouvement de réglage et est solidaire du corps de base est en outre agencé sur la plateforme, dans lequel l'élément de ressort (7) s'oppose à un mouvement de translation parasite correspondant dans le plan de la plateforme ou à un mouvement de rotation parasite correspondant de la plateforme autour d'un axe de rotation agencé perpendiculairement au plan de la plate-forme en raison du mouvement de réglage, dans lequel le dispositif de transmission à levier (5) comporte au moins deux sections de levier en interaction (10).

2. Dispositif de réglage selon la revendication 1, **caractérisé en ce que** la plateforme (4) est composée de deux parties et comporte une partie de plateforme supérieure (41), sur laquelle peut être placé un élément devant être déplacé par le dispositif de réglage, et une partie de plate-forme inférieure (42), et l'élément de ressort (7) est agencé dans un logement (43) correspondant à sa forme dans la partie de plate-forme inférieure et est de préférence collé à la partie de plate-forme inférieure.

3. Dispositif de réglage selon la revendication 1 ou 2, **caractérisé en ce que** l'élément de ressort (7) comprend une section centrale (8) et au moins deux sections de bras (9) s'étendant à partir de la section centrale.

4. Dispositif de réglage selon l'une des revendications précédentes, **caractérisé en ce que** les éléments d'articulation (6) sont conçus comme des articulations monolithiques.

5. Dispositif de réglage selon la revendication 4, **caractérisé en ce que** chacun des éléments d'articulation (6) est conçu comme une paire de ressorts à lame (61, 62) agencés essentiellement perpendiculairement l'un à l'autre.

6. Dispositif de réglage selon l'une des revendications précédentes, **caractérisé en ce que** la plateforme (4) est connectée de manière amovible au corps de base (2).

7. Dispositif de réglage selon la revendication 1, **caractérisé en ce que** lesdites au moins deux sections de levier en interaction (10) sont agencées de manière imbriquée.

8. Dispositif de réglage selon la revendication 1 ou 7, **caractérisé en ce que** les sections de levier sont connectées entre elles par au moins une articulation monolithique (11).

9. Dispositif de réglage selon l'une des revendications 1, 7 ou 8, **caractérisé en ce que** le dispositif de transmission à levier (5) est formé d'une seule pièce avec le corps de base (2).

10. Dispositif de réglage selon l'une des revendications 1 ou 7 à 9, **caractérisé en ce que** le rapport de transmission par levier du dispositif de transmission à levier (5) est comprise entre 5 et 7.

11. Dispositif de réglage selon l'une des revendications précédentes, **caractérisé en ce que** la plateforme (4) est basculable autour de deux axes de basculement se coupant à angle droit et traversant la plateforme, et le dispositif de réglage comporte quatre éléments d'entraînement (3) et quatre éléments d'articulation (6) fixés à la plate-forme sous la forme d'articulations monolithiques.

12. Dispositif de réglage selon la revendication 11, **caractérisé en ce que** les articulations monolithiques sont connectées d'une seule pièce à la plateforme.

13. Dispositif de réglage selon la revendication 11 ou 12, **caractérisé en ce que** l'élément de ressort comporte une section centrale annulaire (8) et quatre sections de bras (9) s'étendant en forme d'étoile à partir de celle-ci .

14. Dispositif de réglage selon l'une des revendications 11 à 13, **caractérisé en ce que** le point de croisement des deux axes de basculement, qui définit un point de pivotement, se situe essentiellement dans un même plan passant par les quatre points de fixation des éléments d'articulation à la plate-forme.

15. Dispositif de réglage selon l'une des revendications précédentes, **caractérisé en ce que**, pour un volume de l'enveloppe du dispositif de réglage compris entre 55 et 60 cm3, un mouvement de basculement peut s'effectuer selon un angle de basculement compris entre 5×10⁻⁶° et 1° degré et/ou le mouvement de translation peut s'effectuer dans une plage comprise entre 1 nm et 200 µm.

16. Dispositif de réglage selon la revendication 15, **caractérisé en ce que** la plate-forme peut commuter entre les angles de basculement minimum et maximum et/ou entre les déflexions de translation minimum et maximum à une fréquence allant jusqu'à 200 Hz.

17. Utilisation du dispositif de réglage selon l'une des revendications précédentes dans une unité à miroir basculant.
